# EUROPEAN PATENT SPECIFICATION

(11) **EP 3 026 875 B1**
(45) Date of publication and mention of the grant of the patent: **01.01.2020**
(21) Application number: 15195325.4
(22) Date of filing: 19.11.2015
(51) Int. Cl.: G06F 3/0484, H04L 12/28, H04M 1/725, G06F 3/0481

(54) **METHOD AND APPARATUS FOR ADJUSTING OPERATIONAL STATUS OF SMART HOME DEVICE**
VERFAHREN UND VORRICHTUNG ZUR EINSTELLUNG DES BETRIEBSZUSTANDS EINES INTELLIGENTEN HAUSHALTSGERÄTS
PROCÉDÉ ET APPAREIL DE RÉGLAGE D'ÉTAT DE FONCTIONNEMENT D'UN DISPOSITIF ÉLECTROMÉNAGER INTELLIGENT

(30) Priority: 27.11.2014 CN 201410706098
(43) Date of publication of application: 01.06.2016
(73) Proprietor: Xiaomi Inc., Beijing 100085 (CN)
(72) Inventor: HAN, Guangyi, BEIJING 100085 (CN); ZHAO, Ming, BEIJING 100085 (CN); HOU, Enxing, BEIJING 100085 (CN)
(74) Representative: Studio Torta S.p.A.

(56) References cited:
- WO-A1-2014/094532
- US-A1- 2007 197 236
- US-A1- 2013 139 113

## Description

### TECHNICAL FIELD

The present disclosure relates to the field of communication technologies, and more particularly, relates to a method and an apparatus for adjusting a running state of a smart housing device.

### BACKGROUND

More and more smart housing devices have been pushed into households. Therefore, smart housing has become a more and more important part in people's daily life. Generally, such smart housing devices all need to be controlled, by clicking corresponding control keys on a mobile phone application (app), to implement functions of the smart housing devices. With respect to a user, operations on the application are still needed. Therefore, the operations of the smart housing devices are slightly complicated, and thus no convenience is brought to the user. Document US 2007/0197236 discloses a system and a method for controlling home appliances using SMSs. Document US 2013/0139113 discloses how to create shortcuts that group and sequence actions to perform a task. However, the above mentioned issues are not overcome.

### SUMMARY

To overcome the problem existing in the related technologies, embodiments of the present disclosure provide a method and an apparatus for adjusting a running state of a smart housing device, to improve convenience in adjusting the running state of the smart housing device for a user.

According to a first aspect of embodiments of the present disclosure, a method for adjusting a running state of a smart housing device is provided, as set forth in claim 1.

According to a second aspect of embodiments of the present disclosure, an apparatus for adjusting a smart housing device is provided, as set forth in claim 4.

According to a third aspect of the embodiments in the present disclosure, there is provided a computer program as set forth in claim 7.

The technical solutions provided in the embodiments of the present disclosure may achieve the following beneficial effects:

A device list on an application of a mobile terminal is monitored, and thus a shortcut key for a smart housing device selected in the device list is created on a desktop of the mobile terminal; and a current state of the selected smart housing device is directly adjusted via the shortcut key on the desktop of the mobile terminal. This simplifies operation procedures of a user, such that the user is capable of conveniently and quickly operating the state of the smart housing device, thereby improving convenience in controlling the smart housing device for the user and facilitating use of the smart housing device for the user.

It shall be appreciated that the above general description and the detailed description hereinafter are only illustrative and interpretative but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
FIG. 1 is a flowchart illustrating a method for adjusting a running state of a smart housing device according to an exemplary embodiment of the present disclosure;
FIG. 2 is a flowchart illustrating a method for adjusting a running state of a smart housing device according to a first exemplary embodiment of the present disclosure;
FIG. 3 is a flowchart illustrating a method for adjusting a running state of a smart housing device according to a second exemplary embodiment of the present disclosure;
FIG. 4A is a schematic diagram illustrating control of an application of a smart housing device according to an exemplary embodiment of the present disclosure;
FIG. 4B is a schematic diagram illustrating addition of a shortcut key according to an exemplary embodiment of the present disclosure;
FIG. 4C is a schematic diagram illustrating a shortcut key created on the desktop of a mobile terminal according to an exemplary embodiment of the present disclosure;
FIG. 4D is a schematic diagram illustrating a current state displayed on the shortcut key according to an exemplary embodiment of the present disclosure;
FIG. 5 is a block diagram illustrating an apparatus for adjusting a running state of a smart housing device according to an exemplary embodiment of the present disclosure;
FIG. 6 is a block diagram illustrating another apparatus for adjusting a running state of a smart housing device according to an exemplary embodiment of the present disclosure; and
FIG. 7 is a block diagram illustrating an apparatus suitable for adjusting a running state of a smart housing device according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The smart housing device according to the embodiments of the present disclosure communicates with a terminal device via a communication interface of the Internet. The smart housing device may be, for example, a smart lamp, a smart coffee machine, a computer device, a safety assurance system, a video and sound system, a smart water heater, or a smart air conditioner. The above devices all have an enabling state and a disabling state. In addition, depending on functions of each smart housing device, corresponding parameters of the smart housing device need to be adjusted. For example, adjustment and control of such parameters as temperature, humidity, cleanliness and speed are needed for a smart air conditioner.

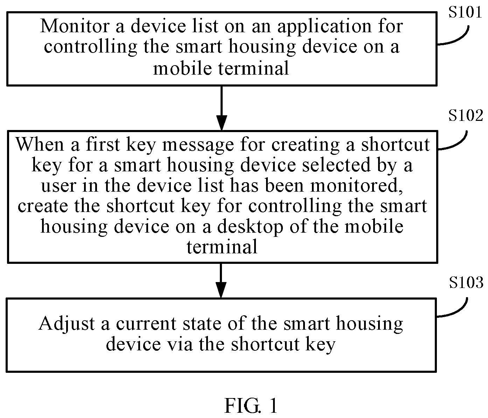

FIG. 1 is a flowchart illustrating a method for adjusting a running state of a smart housing device according to an exemplary embodiment of the present disclosure. The method for adjusting a running state of a smart housing device may be performed on a mobile terminal device (for example, a smart phone, and a tablet computer). As illustrated in FIG. 1, the method may include the following steps S101 to S103.

In step S101, a device list on an application for controlling the smart housing device on a mobile terminal is monitored.

In an embodiment, the device list on the application may include household electric appliances equipped with a communication interface, such as a smart socket, a smart electric stew pot, a smart air conditioner, a smart coffee machine and the like. Such a household electric appliance may implement network-based communication with a network access device such as a mobile terminal, a cloud server or the like via the Internet.

In step S102, when a first key message for creating a shortcut key for a smart housing device selected by a user in the device list has been monitored, the shortcut key for controlling the smart housing device is created on a desktop of the mobile terminal.

For example, if the user selects a smart socket in the device list, a shortcut key for controlling the smart socket is created on the desktop of the mobile terminal; and if the user selects and clicks a smart camera in the device list, a shortcut key for controlling the smart camera is created on the desktop of the mobile terminal.

In step S103, a current state of the smart housing device is adjusted via the shortcut key.

For example, in an exemplary scenario, if the user, holding a mobile terminal, leaves home for work, and the user needs to disable the smart socket in the home, the current state of the smart socket is adjusted to a disabling state via the shortcut key for controlling the smart socket that has been created on the desktop of the mobile terminal.

In this embodiment, a device list on an application of a mobile terminal is monitored, and thus a shortcut key for a smart housing device selected in the device list is created on a desktop of the mobile terminal; and a current state of the selected smart housing device is directly adjusted via the shortcut key on the desktop of the mobile terminal. This simplifies operation procedures of a user, such that the user is capable of conveniently and quickly operating the state of the smart housing device, thereby improving convenience in controlling the smart housing device for the user and facilitating use of the smart housing device for the user.

In an embodiment, the method for adjusting a running state of a smart housing device may further include:
after the shortcut key is created, acquiring the current state of the smart housing device from a cloud server; and
displaying the current state of the smart housing device on the shortcut key.

In an embodiment, step S103 may further include:
monitoring a second key message of the shortcut key; and
when the second key message has been monitored, sending an adjustment instruction for adjusting the smart housing device to a cloud server, such that the cloud server adjusts the running state of the smart housing device according to the adjustment instruction.

In an embodiment, the method for adjusting a running state of a smart housing device may further include:
acquiring a state update message from the cloud server; and
updating, according to the state update message, the current state of the smart housing device displayed on the shortcut key.

For the details about controlling the smart housing device, reference may be made to the following embodiments.

Accordingly, the method according to the embodiment of the present disclosure simplifies operation procedures of a user, such that the user is capable of conveniently and quickly operating the state of the smart housing device, thereby improving convenience in controlling the smart housing device for the user and facilitating use of the smart housing device for the user.

The technical solutions of the embodiments of the present disclosure are described with reference to specific embodiments.

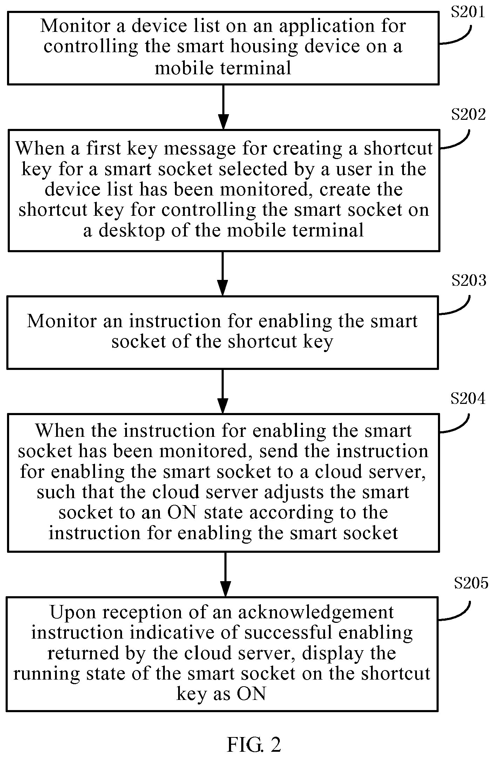

FIG. 2 is a flowchart illustrating a method for adjusting a running state of a smart housing device according to a first exemplary embodiment of the present disclosure. In this embodiment, the method according to the embodiments of the present disclosure is exemplarily described using a scenario where a current state of a smart socket via a shortcut key on a mobile terminal is controlled to be OFF, and the second key message is an instruction for enabling the smart socket as an example. As illustrated in FIG. 2, the method includes the following steps.

In step S201, a device list on an application for controlling the smart housing device on a mobile terminal is monitored.

Step S201 may be referenced to the description of step S101, which is not described herein any further.

In step S202, when a first key message for creating a shortcut key for a smart socket selected by a user in the device list has been monitored, the shortcut key for controlling the smart socket is created on a desktop of the mobile terminal.

Step S202 may be referenced to the description of step S102, which is not described herein any further.

In step S203, an instruction for enabling the smart socket of the shortcut key is monitored.

In step S204, when the instruction for enabling the smart socket has been monitored, the instruction for enabling the smart socket is sent to a cloud server, such that the cloud server adjusts the smart socket to an ON state according to the instruction for enabling the smart socket.

In an embodiment, if the second key message is an instruction for enabling the smart socket, an adjustment instruction for controlling enabling of the smart socket is sent to the cloud server. Upon receiving the adjustment instruction, the cloud server adjusts a current running state of the smart socket to an ON state.

In step S205, upon reception of an acknowledgement instruction indicative of successful enabling returned by the cloud server, the running state of the smart socket is displayed on the shortcut key as ON.

In an embodiment, English characters such as "ON" or "OFF", or corresponding Chinese characters, may be displayed on the shortcut key to indicate an enabling state or a disabling state of the smart socket. If the current state of the smart socket is displayed on the shortcut key of the smart socket, the user may acquire the current running state of the smart socket only by browsing the desktop of the mobile terminal. In this way, the user does not need to, as required in other related technologies, open an application and then search for the current state of the smart socket in the corresponding option.

In this embodiment, the method is exemplarily described using a scenario where a shortcut key is created for a smart socket and the smart socket is enabled using the shortcut key on the desktop of a mobile terminal as an example. The method according to the embodiment of the present disclosure simplifies operation procedures of a user, such that the user is capable of conveniently and quickly operating the state of the smart housing device, thereby improving convenience in controlling the smart housing device for the user and facilitating use of the smart housing device for the user.

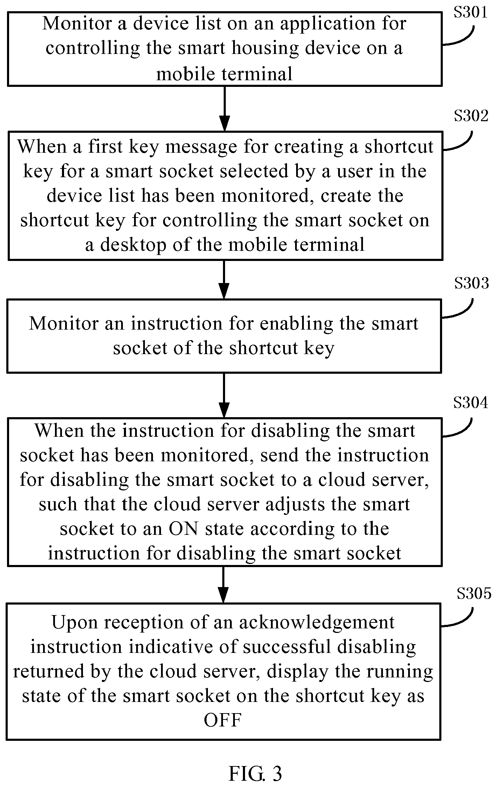

FIG. 3 is a flowchart illustrating a method for adjusting a running state of a smart housing device according to a second exemplary embodiment of the present disclosure. In this embodiment, the method according to the embodiments of the present disclosure is exemplarily described using a scenario where a current state of a smart socket via a shortcut key on a mobile terminal is controlled to be ON, and the second key message is an instruction for disabling the smart socket as an example. As illustrated in FIG. 3, the method includes the following steps.

In step S301, a device list on an application for controlling the smart housing device on a mobile terminal is monitored.

Step S301 may be referenced to the description of step S101, which is not described herein any further.

In step S302, when a first key message for creating a shortcut key for a smart socket selected by a user in the device list has been monitored, the shortcut key for controlling the smart socket is created on a desktop of the mobile terminal.

Step S302 may be referenced to the description of step S102, which is not described herein any further.

In step S303, an instruction for enabling the smart socket of the shortcut key is monitored.

In step S304, when the instruction for disabling the smart socket has been monitored, the instruction for disabling the smart socket is sent to a cloud server, such that the cloud server adjusts the smart socket to an ON state according to the instruction for disabling the smart socket.

In an embodiment, if the second key message is an instruction for disabling the smart socket, an adjustment instruction for controlling disabling of the smart socket is sent to the cloud server. Upon receiving the adjustment instruction, the cloud server adjusts a current running state of the smart socket to an OFF state.

In step S305, upon reception of an acknowledgement instruction indicative of successful disabling returned by the cloud server, the running state of the smart socket is displayed on the shortcut key as OFF.

In this embodiment, the method is exemplarily described using a scenario where a shortcut key is created for a smart socket and the smart socket is disabled using the shortcut key on the desktop of a mobile terminal as an example. The method according to the embodiment of the present disclosure simplifies operation procedures of a user, such that the user is capable of conveniently and quickly operating the state of the smart housing device, thereby improving convenience in controlling the smart housing device for the user and facilitating use of the smart housing device for the user.

In another embodiment, the method may further include the following steps:
acquiring a state update message from the cloud server; and
updating, according to the state update message, the current state of the smart housing device displayed on the shortcut key.

Updating the state of the smart socket displayed on the shortcut key enables the user to accurately acquire or know the current state of the smart housing device, and thereby to conveniently control the smart housing device.

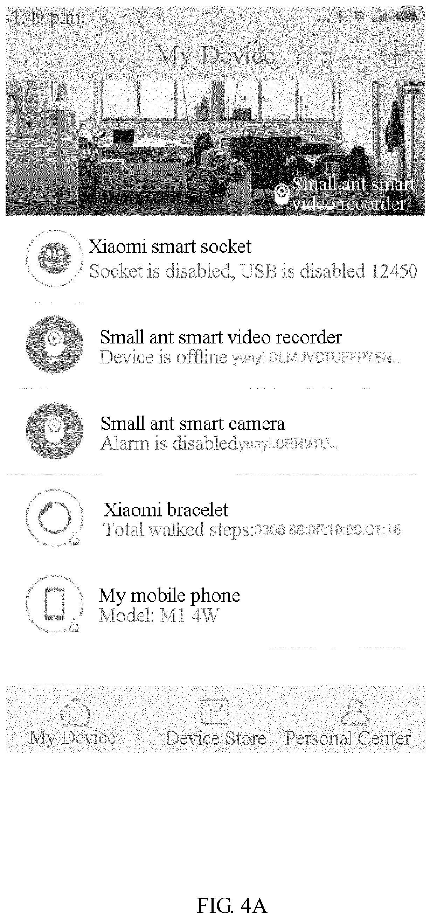

The technical solutions of the embodiments of the present disclosure are described with reference to FIG. 4A to FIG. 4D.

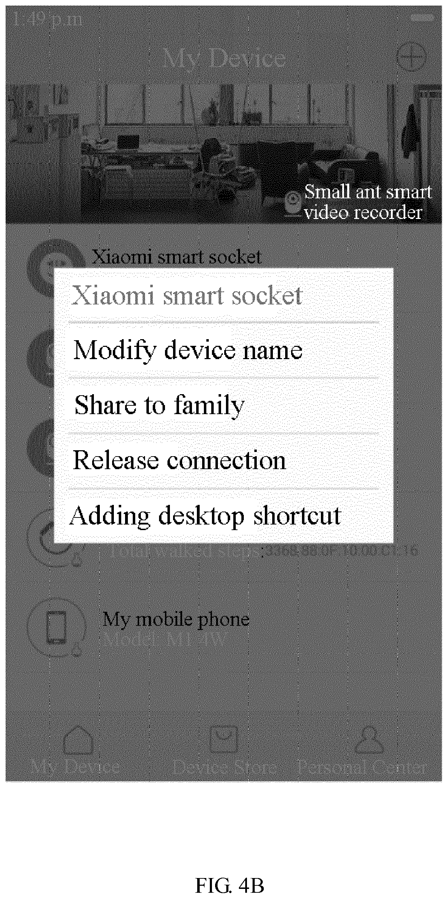

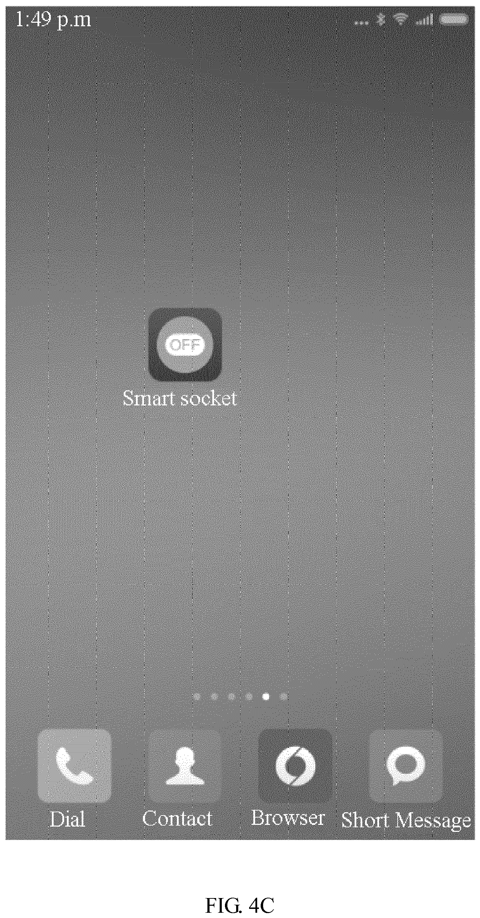

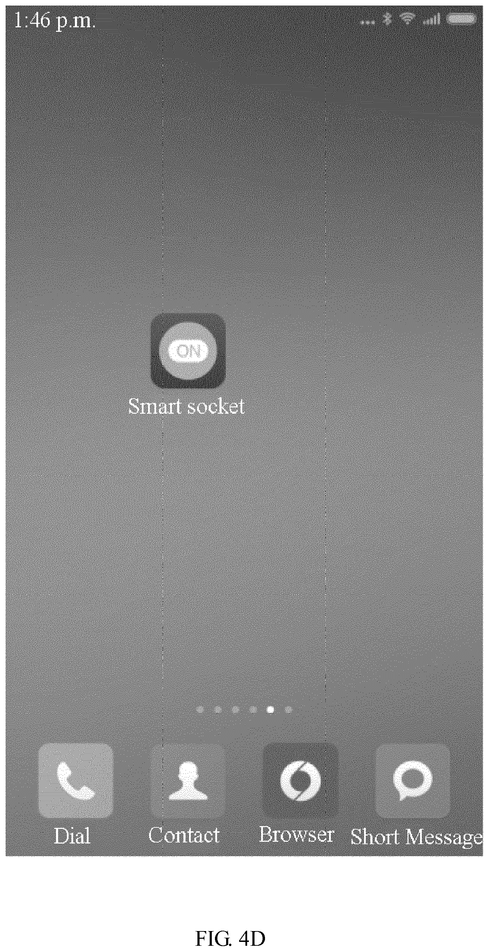

As illustrated in FIG. 4A, "Smart Housing App" on the mobile terminal is opened, and a corresponding smart housing device (for example, a smart socket) is found in the device list. As illustrated in FIG. 4B, a desired shortcut is pressed and held on the smart socket, and "Add a desktop shortcut" is clicked on the prompt menu. As illustrated in FIG. 4C, the shortcut key (displayed in the form of icon) of the smart socket is generated on the desktop of the mobile terminal, wherein "OFF" in the icon indicates that the smart socket is currently in a disabling state. As illustrated in FIG. 4D, by clicking of the icon, the smart socket may switch from the disabling state to an enabling state; in this case, the current running state of the smart socket displayed on the icon also changes to "ON", which indicates that the smart socket is currently in an enabling state.

In addition, when the user manually controls a key of the smart socket to change the enabling or disabling state of the smart socket, the smart socket sends an updated state to a cloud server. The cloud server may send the updated running state to the mobile terminal. Upon receiving the updated running state, the mobile terminal displays the current running state of the smart socket on the icon displayed for the shortcut key.

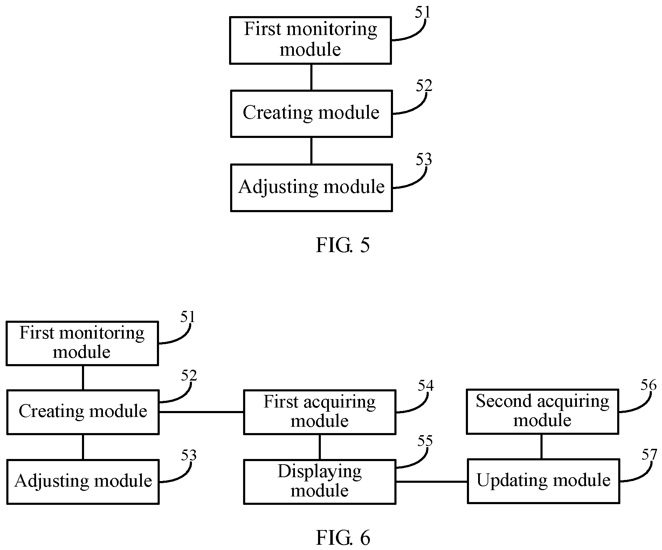

FIG. 5 is a block diagram illustrating an apparatus for adjusting a running state of a smart housing device according to an exemplary embodiment of the present disclosure. As illustrated in FIG. 5, the apparatus for adjusting a running state of a smart housing device includes:
a first monitoring module 51, configured to monitor a device list on an application for adjusting the smart housing device on the mobile terminal;
a creating module 52, configured to: when the first monitoring module has monitored a first key message for creating a shortcut key for a smart housing device selected by a user in the device list, create the shortcut key for adjusting the smart housing device on a desktop of the mobile terminal; and
an adjusting module 53, configured to adjust a current state of the smart housing device via the shortcut key.

As illustrated in FIG. 6, the apparatus may further include:
a first acquiring module 54, configured to: after the creating module 52 creates the shortcut key, acquire the current state of the smart housing device from a cloud server; and
a displaying module 55, configured to: upon receipt of an acknowledgement instruction indicative of a successful adjustment returned by the cloud server, display the current state acquired by the first acquiring module on the shortcut key.

In an embodiment, the adjusting module 53 may include:
a monitoring submodule, configured to monitor a second key message of the shortcut key created by the creating module 52; and
a sending submodule, configured to: when the monitoring submodule monitors the second key message, send an adjustment instruction for controlling the smart housing device to a cloud server, such that the cloud server adjusts the running state of the smart housing device according to the adjustment instruction.

In an embodiment, the apparatus may further include:
a second acquiring module 56, configured to acquire a state update message from the cloud server; and
an updating module 57, configured to update, according to the state update message acquired by the second acquiring module 56, the current state of the smart housing device displayed by the displaying module 55 on the shortcut key.

With respect to the apparatuses in the above embodiments, the specific implementations of operations executed by various modules thereof have been in detail described in the embodiments illustrating the methods, which are not described herein any further.

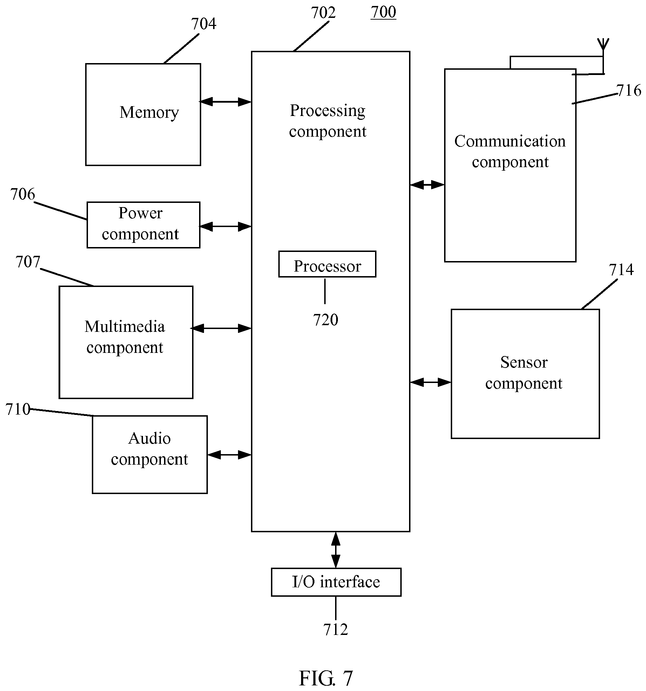

FIG. 7 is a block diagram illustrating an apparatus suitable for adjusting a running state of a smart housing device according to an exemplary embodiment of the present disclosure. For example, the apparatus 700 may be a mobile phone, a computer, a digital broadcast terminal, a messaging device, a gaming console, a tablet, a medical device, exercise equipment, a personal digital assistant, and the like.

Referring to FIG. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or a part of the steps in the above-described methods. In addition, the processing component 702 may include one or more modules which facilitate the interaction between the processing component 702 and other components. For example, the processing component 702 may include a multimedia module to facilitate the interaction between the multimedia component 707 and the processing component 702.

The memory 704 is configured to store various types of data to support the operations of the device 700. Examples of such data include instructions for any application or method operated on the apparatus 700, contact data, phonebook data, messages, pictures, videos, and the like. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power supplies, and other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive external multimedia data when the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the apparatus 700 is in an operation mode, such as a call mode, a recording mode, or a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and a peripheral interface module, such as a keyboard, a click wheel, a button, or the like. The buttons may include, but are not limited to, a home button, a volume button, a starting button, and a locking button.

The sensor component 714 includes one or more sensors to provide status assessments of various aspects of the apparatus 700. For example, the sensor component 714 may detect an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communications, wired or wirelessly, between the apparatus 700 and other devices. The apparatus 700 may access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 704, executable by the processor 720 in the apparatus 700, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A method for adjusting a running state of a smart housing device, applicable on a mobile terminal, comprising monitoring (S101) a device list on an application for controlling the smart housing device on a mobile terminal, the method being **characterized in that** it further comprises:
when a first key message for creating a shortcut key for a smart housing device selected by a user in the device list has been monitored, creating (S102) the shortcut key for controlling the smart housing device on a desktop of the mobile terminal;
adjusting (S103) a current state of the smart housing device via the shortcut key;
after the shortcut key is created, acquiring the current state of the smart housing device from a cloud server; and
upon receipt of an acknowledgement instruction indicative of a successful adjustment returned by the cloud server, displaying the current state on the shortcut key.

2. The method according to claim 1, **characterized in that** the adjusting a current state of the smart housing device via the shortcut key comprises:
monitoring a second key message of the shortcut key; and
when the second key message has been monitored, sending an adjustment instruction for controlling the smart housing device to a cloud server, such that the cloud server adjusts the running state of the smart housing device according to the adjustment instruction.

3. The method according to claim 2, **characterized in that** the method further comprises:
acquiring a state update message from the cloud server; and
updating, according to the state update message, the current state of the smart housing device displayed on the shortcut key.

4. An apparatus for adjusting a running state of a smart housing device, applicable on a mobile terminal, comprising a first monitoring module (51), configured to monitor a device list on an application for controlling the smart housing device on the mobile terminal, the apparatus being **characterized in that** it further comprises:
a creating module (52), configured to: when the first monitoring module (51) has monitored a first key message for creating a shortcut key for a smart housing device selected by a user in the device list, create the shortcut key for controlling the smart housing device on a desktop of the mobile terminal;
an adjusting module (53), configured to adjust a current state of the smart housing device via the shortcut key;
a first acquiring module (54), configured to: after the creating module (52) creates the shortcut key, acquire the current state of the smart housing device from a cloud server; and
a displaying module (55), configured to: upon receipt of an acknowledgement instruction indicative of a successful adjustment returned by the cloud server, display the current state acquired by the first acquiring module (54) on the shortcut key.

5. The apparatus according to claim 4, **characterized in that** the adjusting module (53) comprises:
a monitoring submodule, configured to monitor a second key message of the shortcut key created by the creating module (52); and
a sending submodule, configured to: when the monitoring submodule monitors the second key message, send an adjustment instruction for controlling the smart housing device to the cloud server, such that the cloud server controls the smart housing device according to the adjustment instruction.

6. The apparatus according to claim 5, **characterized in that** the apparatus further comprises:
a second acquiring module (56), configured to acquire a state update message from the cloud server; and
an updating module (57), configured to update, according to the state update message acquired by the second acquiring module (56), the current state of the smart housing device displayed by the displaying module (55) on the shortcut key.

7. A computer program which, when being executed on a processor of an apparatus, performs a method according to any one of claims 1 to 3.

## Patentansprüche

1. Verfahren zum Einstellen eines Betriebszustands einer intelligenten Gehäusevorrichtung, anwendbar auf ein mobiles Endgerät, umfassend das Überwachen (S101) einer Vorrichtungsliste auf einer Anwendung zum Steuern der intelligenten Gehäusevorrichtung auf einem mobilen Endgerät, das Verfahren **dadurch gekennzeichnet, dass** es weiter umfasst:
wenn eine erste Kernbotschaft zum Erzeugen einer Tastenkombination für eine intelligente Gehäusevorrichtung, die durch einen Benutzer in der Vorrichtungsliste ausgewählt wurde, überwacht worden ist, Erzeugen (S102) der Tastenkombination zum Steuern der intelligenten Gehäusevorrichtung auf einer Arbeitsumgebung des mobilen Endgeräts;
Einstellen (S103) eines derzeitigen Zustands der intelligenten Gehäusevorrichtung über die Tastenkombination;
nachdem die Tastenkombination erzeugt ist, Abrufen des aktuellen Zustands der intelligenten Gehäusevorrichtung von einem Cloud-Server; und
bei Erhalt einer Bestätigungsanweisung, die auf eine erfolgreiche Einstellung, die durch den Cloud-Server zurückgegeben wurde, hinweist, Anzeigen des derzeitigen Zustands auf der Tastenkombination.

2. Verfahren nach Anspruch 1, **dadurch gekennzeichnet, dass** das Einstellen eines derzeitigen Zustands der intelligenten Gehäusevorrichtung über die Tastenkombination umfasst:
Überwachen einer zweiten Kernbotschaft der Tastenkombination; und
wenn die zweite Kernbotschaft überwacht worden ist, Senden einer Einstellanweisung zum Steuern der intelligenten Gehäusevorrichtung an einen Cloud-Server, so dass der Cloud-Server den Betriebszustand der intelligenten Gehäusevorrichtung gemäß der Einstellanweisung einstellt.

3. Verfahren nach Anspruch 2, **dadurch gekennzeichnet, dass** das Verfahren weiter umfasst:
Abrufen einer Zustandsaktualisierungsnachricht vom Cloud-Server; und
Aktualisieren des derzeitigen Zustands der intelligenten Gehäusevorrichtung, wobei der derzeitige Zustand der intelligenten Gehäusevorrichtung auf der Tastenkombination angezeigt ist.

4. Einrichtung zum Einstellen eines Betriebszustands einer intelligenten Gehäusevorrichtung, anwendbar auf ein mobiles Endgerät, umfassend:
ein erstes Überwachungsmodul (51), konfiguriert zum Überwachen einer Vorrichtungsliste in einer Anwendung zum Steuern der intelligenten Gehäusevorrichtung auf dem Mobiltelefon, wobei die Einrichtung **dadurch gekennzeichnet ist, dass** sie weiter umfasst:
ein Erzeugungsmodul (52), konfiguriert zum: wenn das erste Überwachungsmodul (51) eine erste Kernbotschaft zum Erzeugen einer Tastenkombination für eine intelligente Gehäusevorrichtung überwacht hat, die durch einen Benutzer in der Vorrichtungsliste ausgewählt wurde, Erzeugen der Tastenkombination zum Steuern der intelligenten Gehäusevorrichtung auf einer Arbeitsumgebung des mobilen Endgeräts;
ein Einstellmodul (53), konfiguriert zum Einstellen eines derzeitigen Zustands der intelligenten Gehäusevorrichtung über die Tastenkombination;
ein erstes Abrufmodul (54), konfiguriert zum: nachdem das Erzeugungsmodul (52) die Tastenkombination erzeugt, Abrufen des derzeitigen Zustands der intelligenten Gehäusevorrichtung von einem Cloud-Server; und
ein Anzeigemodul (55), konfiguriert zum: bei Erhalt einer Bestätigungsanweisung, die auf eine erfolgreiche Einstellung, die von dem Cloud-Server zurückgegeben wurde, hinweist, Anzeigen des derzeitigen Zustands, der durch das erste Abrufmodul (54) abgerufen wurde, auf der Tastenkombination.

5. Einrichtung nach Anspruch 4, **dadurch gekennzeichnet, dass** das Einstellmodul (53) umfasst:
ein Überwachungsuntermodul, konfiguriert zum Überwachen einer zweiten Kernbotschaft der Tastenkombination, die durch das Erzeugungsmodul (52) erzeugt wurde; und
ein Sendeuntermodul, konfiguriert zum: wenn das Überwachungsuntermodul die zweite Kernbotschaft überwacht, Senden einer Einstellanweisung zum Steuern der intelligenten Gehäusevorrichtung an den Cloud-Server, sodass der Cloud-Server die intelligente Gehäusevorrichtung gemäß der Einstellanweisung steuert.

6. Einrichtung nach Anspruch 5, **dadurch gekennzeichnet, dass** die Einrichtung weiter umfasst:
ein zweites Abrufmodul (56), konfiguriert zum Abrufen einer Zustandsaktualisierungsnachricht von dem Cloud-Server; und
ein Aktualisierungsmodul (57), konfiguriert zum Aktualisieren, gemäß der Zustandsaktualisierungsnachricht, die durch das zweite Abrufmodul (56) abgerufen wurde, des derzeitigen Zustands der intelligenten Gehäusevorrichtung, der durch das Anzeigemodul (55) auf der Tastenkombination angezeigt wird.

7. Computerprogramm, das, wenn es auf einem Prozessor einer Einrichtung ausgeführt wird, ein Verfahren nach einem der Ansprüche 1 bis 3 durchführt.

## Revendications

1. Procédé pour le réglage d'un état de fonctionnement d'un dispositif électroménager intelligent, applicable sur un terminal mobile, comprenant
la surveillance (S101) d'une liste de dispositifs sur une application destinée à commander le dispositif électroménager intelligent sur un terminal mobile, le procédé étant **caractérisé en ce qu'**il comprend en outre :
lorsqu'un premier message clé pour la création d'une touche de raccourci pour un dispositif électroménager intelligent sélectionné par un utilisateur dans la liste de dispositifs a été surveillé, la création (S102) de la touche de raccourci pour la commande du dispositif électroménager intelligent sur un bureau du terminal mobile ;
le réglage (S103) d'un état actuel du dispositif électroménager intelligent via la touche de raccourci ;
après la création de la touche de raccourci, l'acquisition de l'état actuel du dispositif électroménager intelligent à partir d'un serveur en nuage ; et
à réception d'une instruction de confirmation indicative d'un réglage effectué avec succès, renvoyée par le serveur en nuage, l'affichage de l'état actuel sur la touche de raccourci.

2. Procédé selon la revendication 1, **caractérisé en ce que** le réglage d'un état actuel du dispositif électroménager intelligent via la touche de raccourci comprend :
la surveillance d'un second message clé de la touche de raccourci ; et
lorsque le second message clé a été surveillé, l'envoi à un serveur en nuage d'une instruction de réglage pour commander le dispositif électroménager intelligent, de sorte que le serveur en nuage règle l'état de fonctionnement du dispositif électroménager intelligent conformément à l'instruction de réglage.

3. Procédé selon la revendication 2, **caractérisé en ce que** le procédé comprend en outre :
l'acquisition d'un message d'état actualisé à partir du serveur en nuage ; et
l'actualisation, conformément au message d'état actualisé, de l'état actuel du dispositif électroménager intelligent affiché sur la touche de raccourci.

4. Appareil destiné au réglage d'un état de fonctionnement d'un dispositif électroménager intelligent, applicable sur un terminal mobile, comprenant
un premier module de surveillance (51), configuré pour surveiller une liste de dispositifs sur une application destinée à commander le dispositif électroménager intelligent sur le terminal mobile, l'appareil étant **caractérisé en ce qu'**il comprend en outre :
un module de création (52), configuré pour : lorsque le premier module de surveillance (51) a surveillé un premier message clé pour la création d'une touche de raccourci pour un dispositif électroménager intelligent sélectionné par un utilisateur dans la liste de dispositifs, créer la touche de raccourci pour commander le dispositif électroménager intelligent sur un bureau du terminal mobile ;
un module de réglage (53), configuré pour régler un état actuel du dispositif électroménager intelligent via la touche de raccourci ;
un premier module d'acquisition (54), configuré pour : après la création de la touche de raccourci par le module de création (52), acquérir l'état actuel du dispositif électroménager intelligent à partir d'un serveur en nuage ; et
un module d'affichage (55), configuré pour : à réception d'une instruction de confirmation indicative d'un réglage effectué avec succès renvoyée par le serveur en nuage, afficher sur la touche de raccourci l'état actuel acquis par le premier module d'acquisition (54).

5. Appareil selon la revendication 4, **caractérisé en ce que** le module de réglage (53) comprend :
un sous-module de surveillance, configuré pour surveiller un second message clé de la touche de raccourci créée par le module de création (52) ; et
un sous-module d'envoi, configuré pour : lorsque le sous-module de surveillance surveille le second message clé, envoyer au serveur en nuage une instruction de réglage pour commander le dispositif électroménager intelligent, de sorte que le serveur en nuage commande le dispositif électroménager intelligent conformément à l'instruction de réglage.

6. Appareil selon la revendication 5, **caractérisé en ce que** l'appareil comprend en outre :
un second module d'acquisition (56) configuré pour acquérir un message d'état actualisé à partir du serveur en nuage : et
un module d'actualisation (57), configuré pour actualiser, conformément au message d'état actualisé acquis par le second module d'acquisition (56), l'état actuel du dispositif électroménager intelligent affiché sur la touche de raccourci par le module d'affichage (55).

7. Programme informatique qui, lorsqu'il est exécuté sur un processeur d'un appareil, exécute un procédé selon l'une quelconque des revendications 1 à 3.
